Europäisches Patentamt
European Patent Office
Office européen des brevets

(19) (11) Publication number: 0 362 792 A2

(12) EUROPEAN PATENT APPLICATION

(21) Application number: 89118326.1

(51) Int. Cl.5: C08G 64/04 , G11B 7/24

(22) Date of filing: 03.10.89

(30) Priority: 05.10.88 JP 251431/88
08.02.89 JP 29134/89

(43) Date of publication of application:
11.04.90 Bulletin 90/15

(84) Designated Contracting States:
DE GB NL

(71) Applicant: DAICEL CHEMICAL INDUSTRIES, LTD.
1, Teppo-cho Sakai-shi
Osaka 590(JP)

(72) Inventor: Kanno, Tatsuya
500, Kamiyobe Yobe-ku
Himeji-shi Hyogo(JP)

(74) Representative: Patentanwälte Grünecker, Kinkeldey, Stockmair & Partner
Maximilianstrasse 58
D-8000 München 22(DE)

# (54) Aromatic polycarbonate copolymer and optical disk having a substrate of the same.

(57) An aromatic polycarbonate copolymer for an optical disk substrate is produced by combining at least two bisphenols selected from those of the following general formulae (I), (II), and (III):

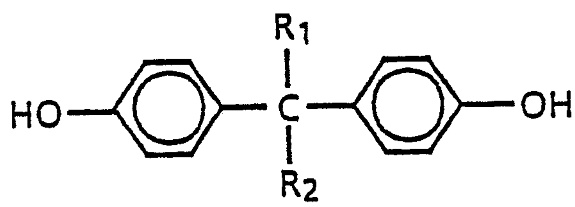
(I)

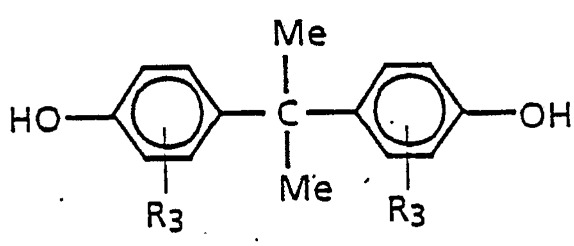
(II)

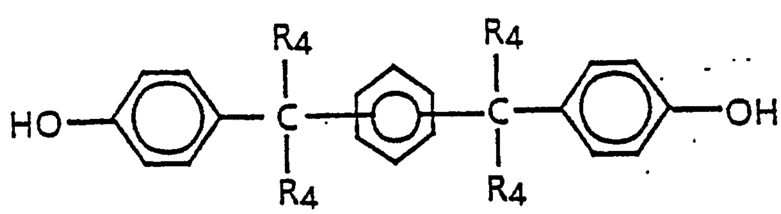
(III)

wherein $R_1$, $R_2$, $R_3$, and $R_4$ are each hydrogen, a straight-chain or branched alkyl group having 1 to 8 carbon atoms, or a phenyl group.

EP 0 362 792 A2

Fig. 1

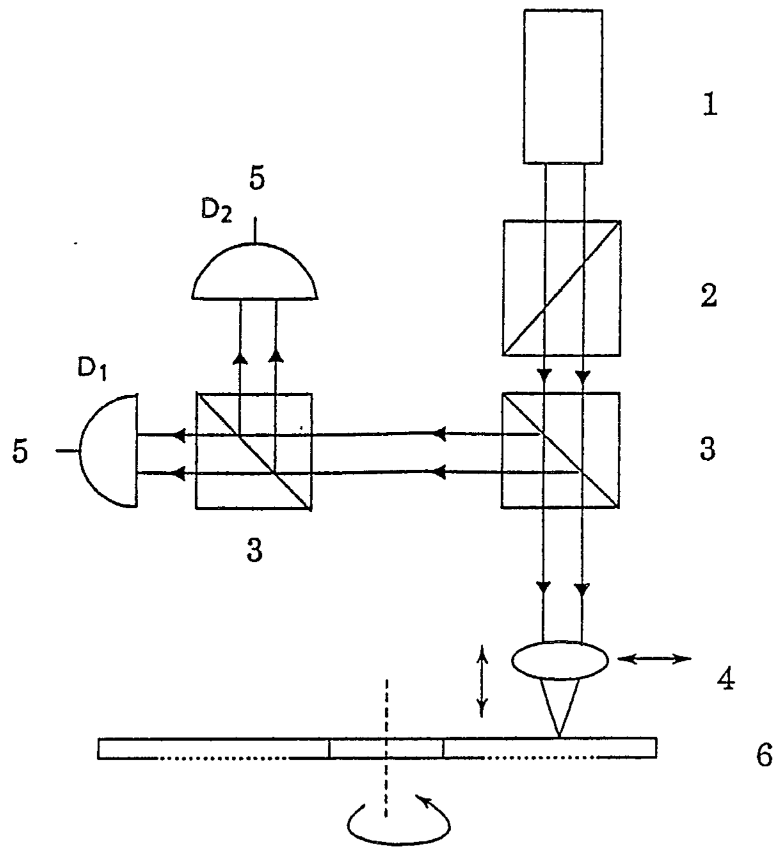

# Aromatic polycarbonate copolymer and optical disk having a substrate of the same

The present invention relates to an aromatic polycarbonate copolymer for use in an optical information recording system in which signals are recorded by means of a laser beam and the recorded signals are read by taking advantage of reflection or transmission of a laser beam.

(Prior Art)

Great expectations for the extensive practical use in the recording and reproduction of not only images and sounds but also a large amount of information are placed on an optical information recording/reproducing system of the DRAW (direct read after write) type and the erasable-DRAW (erasable direct read after write) type in which a disk is irradiated with a spot beam of a laser to record signals therein in the form of fine pits and the signals thus recorded are read by detecting the amount of reflected or transmitted light. The above-described expectations are due to the advantage of the system, such as a remarkably increased recording density, realization of erasure and writing in the system of the erasable-DRAW type, and excellent characteristics of reproduced images and sounds. The disk for use in such an optical information recording/recording system should be not only transparent because of necessity of transmission of a laser beam through the disk but also optically homogeneous in order to reduce errors in readout. However, when a laser beam is transmitted through a disk body, birefringence occurs mainly due to thermal stress, molecular orientation, and residual stress attributable to changes in volume around the glass transition point which are caused during the steps of cooling and flowing a resin in the production of a disk body and to the steric structure of the molecular chains. A large signal unbalance due to the occurrence of the birefringence is a fatal drawback of an optical disk.

Further, a high residual oligomer content, a high residual chloride ion content, and a high water absorption of a resin used in the production of a disk are causative of a lowering in the dimensional stability and durability of a recording film layer of a produced disk. Further, it is conceivable that the deterioration of a reflective film layer provided on a recording film layer due to an external environment causes a lowering in the sensitivity of readout, i.e., C/N, and the loss of the reliability of the disk.

The birefringence of a disk caused mainly by thermal stress, molecular orientation, and residual stress which are brought about during the steps of cooling and flowing a resin in the production of a disk body can be considerably reduced by suitably selecting the condition of disk production. However, the birefringence of a disk greatly depends on the inherent birefringence of the resin per se, that is, photoelastic constant and orientation birefringence, i.e., steric structure of molecules. Further, the large signal unbalance of an optical disk due to the above-described birefringence and lowering in the reflectance are unfavorable from the viewpoint of the reliability of the recording/reproducing function and durability of an optical disk. Up to now, no proposal for solving the above problems has been made in prior art literature and patents.

( Summary of the Invention )

The birefringence can be expressed as a product of a photoelastic constant and a residual stress by the following equation (1):

$n_1 - n_2 = C(\sigma_1 - \sigma_2)$ (1)

wherein

$n_1 - n_2$: birefringence,

$\sigma_1 - \sigma_2$: residual stress, and

C : photoelastic constant.

It is apparent that a decrease in the photoelastic constant in the equation (1) leads to a decrease in the birefringence of the resulting disk even when the disk is formed under the same molding conditions. In view of the above, the present inventors have made extensive and intensive studies and, as a result, have found that an aromatic polycarbonate copolymer produced by combining at least two bisphenols selected from among those of the following general formulae (I), (II), and (III) with each other through carbonate linkage is a resin having a low photoelastic constant, a low water absorption, and a high glass transition point, and that an optical disk produced therefrom is less liable to bring about signal unbalance and lowering in the reflectance by virtue of small birefringence as determined with obliquely incident light:

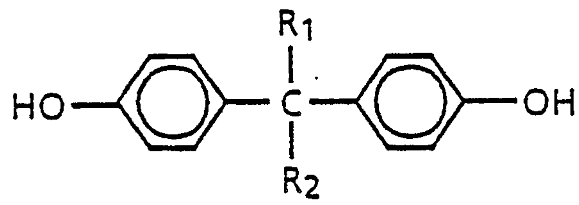

(I)

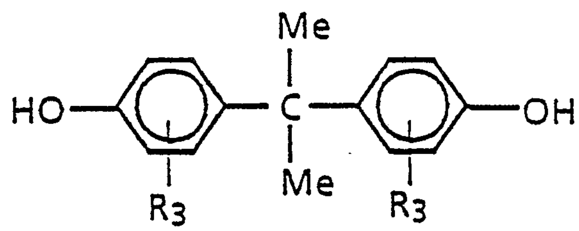

(II)

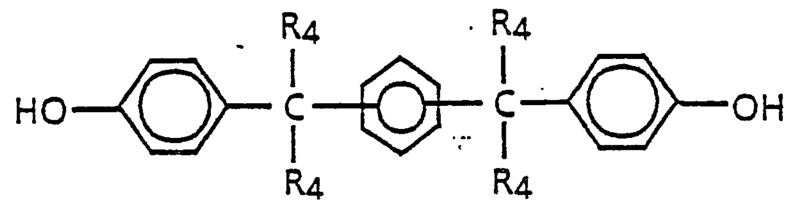

(III)

wherein $R_1$, $R_2$, $R_3$, and $R_4$ are each hydrogen, a straight-chain or branched alkyl group having 1 to 8 carbon atoms, or a phenyl group. This has led to the completion of the present invention.

Accordingly, the present invention provides the following aromatic polycarbonate copolymers.

1. An aromatic polycarbonate copolymer for an optical disk substrate produced by combining at least two bisphenols selected from among those of the following general formulae (I), (II), and (III):

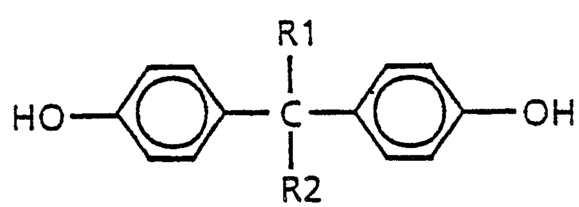

(I)

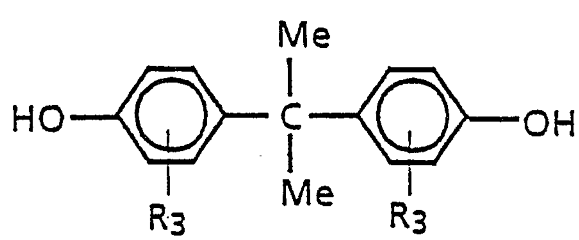

(II)

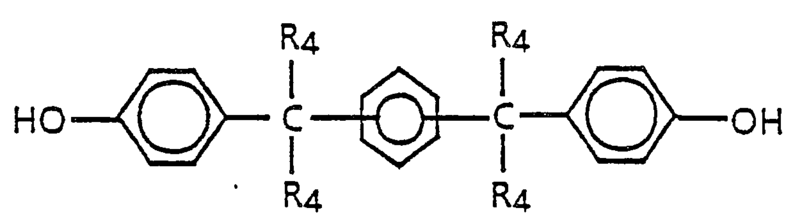

(III)

wherein $R_1$, $R_2$, $R_3$, and $R_4$ are each hydrogen, a straight-chain or branched alkyl group having 1 to 8 carbon atoms, or a phenyl group,
with each other through carbonate linkage.

2. An aromatic polycarbonate copolymer for an optical disk substrate according to claim 1, which has

a viscosity average molecular weight ( $\overline{M}v$) of 15,000 to 25,000 as calculated according to the following equation (IV) by making use of an intrinsic viscosity [η] value determined at 20 °C in dichloromethane:

$[\eta] = 1.11 \times 10^{-4}(\overline{M}v)^{0.82}$ (IV)

3. An aromatic polycarbonate copolymer for an optical disk substrate according to claim 1 or 2, wherein the amount of an oligomer having a molecular weight ( $\overline{M}v$) of 5,000 or less in terms of standard polystyrene and remaining in said aromatic polycarbonate copolymer is 3% or less.

4. An aromatic polycarbonate copolymer for an optical disk substrate according to claim 1, 2 or 3, which has a residual chloride ion content of 1.0 ppm or less.

5. An aromatic polycarbonate copolymer for an optical disk substrate according to claim 1, 2, 3, or 4, which exhibits a water absorption of 0.35% or less.

6. An aromatic polycarbonate copolymer for an optical disk substrate according to claim 1, 2, 3, 4, or 5, which has a glass transition point (Tg) of 130 °C or above.

7. An aromatic polycarbonate copolymer for an optical disk substrate according to claim 1, 2, 3, 4, 5, or 6, which has a photoelastic constant of 60 Brewsters ($10^{-12}$ $m^2/N$).

8. An aromatic polycarbonate copolymer for an optical disk substrate according to claim 1, 2, 3, 4, 5, 6, or 7, wherein an optical disk substrate produced therefrom exhibits a birefringence of $4 \times 10^{-4}$ or less as determined with obliquely incident light.

9. An aromatic polycarbonate copolymer for an optical disk substrate according to claim 1, 2, 3, 4, 5, 6, 7, or 8, wherein an optical disk comprising an optical disk substrate produced therefrom exhibits a signal unbalance (D) defined by the following equation of 0.06 or less:

$$D = \frac{D_1 - D_2}{D_1 + D_2}$$

wherein $D_1$ and $D_2$ are respectively values obtained by measuring light transmitted through a beam splitter and light reflected by said beam splitter by means of a pin diode.

10. An aromatic polycarbonate copolymer for an optical disk substrate according to claim 1, 2, 3, 4, 5, 6, 7, 8, 9, wherein an optical disk comprising an optical disk substrate produced therefrom and, superimposed thereon, a recording film layer and a reflective film layer in that order exhibits a reduction rate of reflectance of 10% or less based on the initial reflectance.

Representative examples of each component will now be described.

Examples of the bisphenol represented by the general formula (I) include 2,2-bis(4-hydroxyphenyl)-propane, 2,2-bis(4-hydroxyphenyl)butane, 2,2-bis(4-hydroxyphenyl)-4-methylpentane, 2,2-bis(4-hydroxyphenyl)octane, 1,1-bis(4-hydroxyphenyl)cyclohexane, and 4,4′-dihydroxy-2,2,2-triphenylethane. Examples of the bisphenol represented by the general formula (II) include 2,2-bis(4-hydroxy-3-methylphenyl)propane, 2,2-bis(4-hydroxy-3-isopropylphenyl)propane, 2,2-bis(4-hydroxy-3-sec-butylphenyl)propane, 2,2-bis(3,5-dimethyl-4-hydroxyphenyl)propane, and 2,2-bis(4-hydroxy-3-tert-butylphenyl)propane. Examples of the bisphenol represented by the general formula (III) include 1,1′-bis(4-hydroxyphenyl)-p-diisopropylbenzene and 1,1′-bis(4-hydroxyphenyl)-m-diisopropylbenzene. It is also possible to select an additional bisphenol as a third component from those represented by the general formulae (I), (II), and (III) to give a terpolymer. The aromatic polycarbonate copolymer of the present invention is prepared by the following methods. In the following methods, 1,1′-bis(4-hydroxyphenyl)-p-diisopropylbenzene represented by the general formula (I) is used as a representative example of a comonomer.

①Ester exchange method:

A mixture of 1,1′-bis(4-hydroxyphenyl)-p- diisopropylbenzene with 4,4′-dihydroxy-2,2,2-triphenylethane is reacted with diphenyl carbonate in an amount slightly larger than the stoichiometrical amount in the presence of a common carbonation catalyst at a temperature of about 160 to 180 °C under atmospheric pressure for about 30 min while introducing an inert gas. The reaction system is gradually evacuated over a period of about 2 to 3 hr at about 180 to 220 °C to conduct precondensation. The precondensation is completed at 220 °C under a pressure of 10 Torr. Thereafter, a condensation reaction is allowed to proceed under a pressure of 10 Torr at 270 °C for 30 min and then under a pressure of 5 Torr at 270 °C for 20 min, followed by post-condensation under a reduced pressure of 0.5 Torr or less, preferably 0.3 Torr to 0.1 Torr at 270 °C for 1.5 to 2.0 hr. Examples of the carbonation catalyst suitable for the formation of a carbonate

linkage include alkali metal catalysts and alkaline earth metal catalysts such as lithium-base, potassium-base, sodium-base, calcium-base, and tin-base catalysts. More specific examples of the carbonation catalysts include lithium hydroxide, lithium carbonate, potassium borohydride, potassium hydrogenphosphate, sodium hydroxide, sodium borohydride, calcium hydride, dibutyltin oxide, and stannous oxide. Among them, potassium-base catalysts are preferable.

②Phosgene method:

A three-necked flask is provided with a stirrer, a thermometer, a gas inlet tube, and an exhaust tube. A mixture of 1,1′-bis(4-hydroxyphenyl)-p-diisopropylbenzene with 4,4′-dihydroxy-2,2,2-triphenylethane is dissolved in pyridine. A phosgene gas is fed into the resultant solution with vigorous stirring. Since phosgene is highly poisonous, this step should be conducted within a powerful draft. Further, the end of the exhaust tube is provided with a unit which makes excess phosgene nonpoisonous through decomposition thereof with a 10% aqueous solution of sodium hydroxide. Phosgene is fed into the flask from a cylinder through a scrubbing bottle, a scrubbing bottle containing paraffin (serving to count the number of bubbles), and an empty scrubbing bottle in that order. A glass inlet tube is inserted into a portion above the level of the stirrer. The tip of the inlet tube is widened in a funnel form in order to prevent the inlet tube from being clogged with a precipitated pyridine salt. Pyridine hydrochloride precipitates accompanying the supply of the gas, which makes the contents of the flask turbid. The reaction temperature is kept at 30 °C or below while cooling the flask with water. As the condensation proceeds, the viscosity of the contents is increased. Phosgene is supplied until a yellow color derived from a phosgene-bydrogen chloride complex disappears. After the completion of the reaction, methanol is added to allow the resultant polymer to precipitate. The precipitate is separated by filtration and dried. Since the polycarbonate thus obtained is soluble in methylene chloride, pyridine, chloroform, tetrahydrofuran or the like, the polycarbonate is reprecipitated from these solvents with methanol for purification. The polycarbonate copolymer thus obtained is suited for use in a disk for an optical information recording system of the DRAW type or the erasable-DRAW type in which signals are recorded by means of a laser beam and the recorded signals are read by taking advantage of the reflection or transmission of a laser beam. The present invention will now be described with reference to the following Examples which should not be construed as limiting the scope of the invention.

When an aromatic polycarbonate copolymer capable of reducing the photoelastic constant and the birefringence of obliquely incident light is used as an optical disk substrate, the recording and reproducing characteristics and durability of an optical disk are improved by virtue of small signal unbalance and small reduction in the reflectance.

The aromatic polycarbonate copolymer capable of reducing the photoelastic constant contributes to an improvement in the recording and reproducing characteristics and durability of an optical disk by virtue of small birefringence of not only vertically incident light but also obliquely incident light.

Brief Description of the Drawings:

Fig. 1 is a schematic optical system of an optical disk drive.

(Description of reference numerals)

1...laser
2...polarizer
3...beam splitter
4...forcusing lens
5...pin diode
6...optical disk

(Example)

Example 1

A 3-ℓ three-necked flask was charged with 208 parts by weight (50 mol%) of 1,1′-bis(4-hydroxyphenyl)-p-diisopropylbenzene, 174 parts by weight (50 mol%) of 4,4′-dihydroxy-2,2,2-triphenylethane, and 264 parts by weight of diphenyl carbonate. Deaeration and purging with a nitrogen gas were each repeated five times. Thereafter, the mixture was melted on a silicone bath at 180 °C while introducing a nitrogen gas thereinto. After the completion of the melting, a solution prepared by dissolving potassium borohydride as a carbonation catalyst in phenol (in an amount of $10^{-3}$ mol% based on the total amount of the bisphenols fed) was added to the molten mixture, followed by stirring in a nitrogen atmosphere at 180 °C for 30 min. The mixture was then stirred at the same temperature under a pressure of 100 Torr for 30 min and then allowed to react at the same temperature under a pressure of 50 Torr for 30 min. The reaction mixture was gradually heated to 220 °C and then allowed to react at that temperature for 60 min. 80% of the theoretical amount of phenol to be distilled was distilled away in the reactions up to this stage. Thereafter, the reaction was allowed to proceed at the same temperature under a reduced pressure of 10 Torr for 30 min. The temperature was gradually raised to 270 °C, and the reaction was allowed to proceed at that temperature for 30 min. Further, the reaction was continued at the same temperature under a reduced pressure of 5 Torr for 30 min, thereby distilling away phenol in an amount substantially corresponding to the theoretical amount of phenol to be distilled. Thus, the step of precondensation was completed. Subsequently, condensation was conducted at the same temperature under a pressure of 0.1 to 0.3 Torr for 1.5 hr. The resultant polymer as a product was taken out in a nitrogen atmosphere and allowed to cool. The solution viscosity of the polymer was determined at 20 °C using dichloromethane as a solvent. The viscosity-average molecular weight (Mv) of the polymer was calculated based on the value thus obtained and found to be 19,600. The glass transition point (Tg) was measured with a DSC (differential scanning calorimeter; model Perkin-Elmer 2C) and found to be 164 °C. Further, the photoelastic constant (C) was measured and found to be 59 Brewsters ($10^{-12}$ $m^2/N$). Then, the water absorption was measured and found to be 0.30%. Regarding instruments used in the measurements, the glass transition temperature was measured with a DSC (differential scanning calorimeter; model Perkin-Elmer 2C). The photoelastic constant was measured by making use of an instrument prepared by the present inventors for this purpose, and calculated by applying tensile stresses having different magnitudes to a test piece (5 mm x 10 mm x 1 mm), measuring the resultant birefringence, substituting each value for the above-described equation (1), and determining the photoelastic constant from the slope. Incidentally, the photoelastic constant (C), the birefringence as determined with light incident at an oblique angle of 30°, the glass transition temperature ($T_g$), and the water absorption of a polycarbonate of 2,2-bis(4-hydroxyphenyl)propane were 82 Brewsters ($10^{-12}$ $m^2/N$), $3.6 \times 10^{-4}$, 145 °C, and 0.31%, respectively. The content of residual oligomer having a molecular weight of 5,000 or less and the residual chloride ion content were 1.5% and 0.8 ppm, respectively.

The viscosity-average molecular weight was evaluated by measuring the intrinsic viscosity [η] of a solution of the polymer in methylene chloride at 20 °C with a Ubbelohde's viscometer, and calculating the viscosity-average molecular weight ($\overline{M}v$) by making use of the following equation:

$$[\eta] = 1.11 \times 10^{-4} (\overline{M}v)^{0.82}$$

The water absorption was evaluated according to ASTM D570-63.

The residual oligomer content was determined by measuring the molecular weight in terms of standard polystyrene by GPC (gel permeation chromatography; Shimadzu LC-5A) (tetrahydrofuran as solvent; a column temperature of 50 °C).

The residual chloride ion content was measured as follows. 5 g of the formed polycarbonate copolymer was accurately measured and dissolved in 200 ml of dichloromethane. 100 ml of ion-exchanged water was added to the resultant solution, and the mixed solution was refluxed for 1 hr. The resulting solution was subjected to phase separation, and the chloride ion concentration of the water phase was measured with an ion chromatograph analyzer (manufactured by Yokogawa Electric Works Co., Ltd.) to determine the residual ion content.

The signal unbalance, D, was 0.05. The signal unbalance, D, is a value obtained by substituting signal values $D_1$ and $D_2$ shown in Fig. 1 for

$$\frac{D_1 - D_2}{D_1 + D_2}.$$

Example 2

161 parts by weight (50 mol%) of 1,1-bis(4-hydroxyphenyl)cyclohexane was polymerized with 174 parts by weight (50 mol%) of 4,4′-dihydroxy-2,2,2-triphenylethane and 264 parts by weight of diphenyl carbonate in the same manner as that of Example 1.
Viscosity-average molecular weight: $\overline{M}v$ = 21,000
Glass transition point : Tg = 170 °C
Photoelastic constant : C = 59 Brewsters
Birefringence as determined with light incident at an oblique angle of 30° : 3.5 x $10^{-4}$
Water absorption : 0.35%
Residual oligomer content : 2%
Residual chloride ion content : 0.8 ppm
Signal unbalance : D = 0.04

Example 3

161 parts by weight (50 mol%) of 1,1-bis(4-hydroxyphenyl)cyclohexane was polymerized with 154 parts by weight (50 mol%) of 2,2-bis(4-hydroxy-3-methylphenyl)propane and 264 parts by weight of diphenyl carbonate in the same manner as that of Example 1.
Viscosity-average molecular weight: $\overline{M}v$ = 19,800
Glass transition point : Tg = 144 °C
Photoelastic constant : C = 59 Brewsters
Birefringence as determined with light incident at an oblique angle of 30° : 3.8 x $10^{-4}$
Water absorption : 0.23%
Residual oligomer content : 1.8%
Residual chloride ion content : 0.7 ppm
Signal unbalance : D = 0.04

Example 4

174 parts by weight (50 mol%) of 4,4′-dihydroxy-2,2,2-triphenylethane was polymerized with 187 parts by weight (50 mol%) of 2,2-bis(4-hydroxy-3-isopropylphenyl)propane and 264 parts by weight of diphenyl carbonate in the same manner as that of Example 1.
Viscosity-average molecular weight: $\overline{M}v$ = 21,000
Glass transition point : Tg = 134 °C
Photoelastic constant : C = 46 Brewsters
Birefringence as determined with light incident at an oblique angle of 30° : 3.5 x $10^{-4}$
Water absorption : 0.27%
Residual oligomer content : 1.3%
Signal unbalance : D = 0.035

Example 5

175 parts by weight (50 mol%) of 2,2-bis(3,5-dimethyl-4-hydroxyphenyl)propane was polymerized with 192 parts by weight (50 mol%) of 2,2-bis(4-hydroxy-3-isopropylphenyl)propane and 264 parts by weight of diphenyl carbonate in the same manner as that of Example 1.
Viscosity-average molecular weight: $\overline{M}v$ = 17,000
Glass sransition point : Tg = 138 °C
Photoelastic constant : C = 44 Brewsters
Birefringence as determined with light incident at an oblique angle of 30° : 3.2 x $10^{-4}$
Water absorption : 0.28%
Residual oligomer content : 1.8%
Residual chloride ion content : 0.9 ppm
Signal unbalance : D = 0.35

Example 6

208 parts by weight (50 mol%) of 1,1-bis(4-hydroxyphenyl)-p-diisopropylbenzene was polymerized with 154 parts by weight (50 mol%) of 2,2-bis(4-hydroxy-3-isopropylphenyl)propane and 264 parts by weight of diphenyl carbonate in the same manner as that of Example 1.
Viscosity-average molecular weight: $\overline{M}v$ = 20,600
Glass transition point : Tg = 138° C
Photoelastic constant : C = 59 Brewsters
Birefringence as determined with light incident at an oblique angle of 30° : $3.4 \times 10^{-4}$
Water absorption : 0.19%
Residual oligomer content : 2.3%
Residual chloride ion content : 0.8 ppm
Signal unbalance : D = 0.04

Example 7

161 parts by weight (50 mol%) of 1,1-bis(4-hydroxyphenyl)cyclohexane was polymerized with 208 parts by weight (50 mol%) of 1′,1-bis(4-hydroxyphenyl)-m-diisopropylbenzene and 264 parts by weight of diphenyl carbonate in the same manner as that of Example 1.
Viscosity-average molecular weight: $\overline{M}v$ = 18,000
Glass transition point : Tg = 134° C
Photoelastic constant : C = 56 Brewsters
Birefringence as determined with light incident at an oblique angle of 30° : $3.2 \times 10^{-4}$
Water absorption : 0.20%
Residual oligomer content : 1.3%
Residual chloride ion content : 0.8 ppm
Signal unbalance : D = 0.04

Example 8

174 parts by weight (50 mol%) of 4,4′-dihydroxy-2,2,2-triphenylethane was polymerized with 208 parts by weight (50 mol%) of 1′,1-bis(4-hydroxyphenyl)-m-diisopropylbenzene and 264 parts by weight of diphenyl carbonate in the same manner as that of Example 1.
Viscosity-average molecular weight: $\overline{M}v$ = 19,500
Glass transition point : Tg = 131° C
Photoelastic constant : C = 51 Brewsters
Water absorption : 0.28%
Birefringence as determined with light incident at an oblique angle of 30° : $2.5 \times 10^{-4}$
Residual oligomer content : 1.7%
Residual chloride ion content : 0.7 ppm
Signal unbalance : D = 0.03

Example 9

249 parts by weight (60 mol%) of 2,2-bis(4-hydroxyphenyl)propane was polymerized with 137 parts by weight (40 mol%) of 1′,1-bis(4-hydroxyphenyl)-m-diisopropylbenzene and 264 parts by weight of diphenyl carbonate in the same manner as that of Example 1.
Viscosity-average molecular weight: $\overline{M}v$ = 19,700
Glass transition point : Tg = 145° C
Photoelastic constant : C = 48 Brewsters
Water absorption : 0.28 %
Birefringence as determined with light incident at an oblique angle of 30° : $3.4 \times 10^{-4}$
Residual oligomer content : 2.1%
Residual chloride ion content : 0.7 ppm
Signal unbalance : D = 0.04

Example 10

208 parts by weight (50 mol%) of 1′,1-bis(4-hydroxyphenyl)-p-diisopropylbenzene was polymerized with 208 parts by weight (50 mol%) of 1′,1-bis(4-hydroxyphenyl)-m-diisopropylbenzene and 264 parts by weight of diphenyl carbonate in the same manner as that of Example 1.
Viscosity-average molecular weight: $\overline{M}v$ = 23,000
Glass transition point : Tg = 130°C
Photoelastic constant : C = 56 Brewsters
Briefringence as determined with light incident at an oblique angle of 30° : 3.2 x $10^{-4}$
Water absorption : 0.17%
Residual oligomer content : 0.5%
Residual chloride ion content : 0.7 ppm
signal unbalance : D = 0.05

Example 11

208 parts by weight (50 mol%) of 1′,1-bis(4-hydroxyphenyl)-p-diisopropylbenzene was polymerized with 171 parts by weight (50 mol%) of 2,2-bis(3,5-dimethyl-4-hydroxyphenyl)propane and 264 parts by weight of diphenyl carbonate in the same manner as that of Example 1.
Viscosity-average molecular weight: $\overline{M}v$ = 20,500
Glass transition point : Tg = 169°C
Photoelastic constant : C = 58 Brewsters
Birefringence as determined with light incident at an oblique angle of 30° : 3.3 x $10^{-4}$
Water absorption : 0.30%
Residual oligomer content : 0.8%
Residual chloride ion content : 0.8 ppm
Signal unbalance : D = 0.05

Example 12

209 parts by weight (50 mol%) of 2,2-bis(4-hydroxy-3-tert-butylphenyl)propane was polymerized with 140 parts by weight (50 mol%) of 2,2-bis(4-hydroxyphenyl)propane and 264 parts by weight of diphenyl carbonate in the same manner as that of Example 1.
Viscosity-average molecular weight: $\overline{M}v$ = 19,000
Glass transition point : Tg = 133°C
Photoelastic constant : C = 56 Brewsters
Birefringence as determined with light incident at an oblique angle of 30° : 2.8 x $10^{-4}$
Water absorption : 0.22%
Residual oligomer content : 1.0%
Residual chloride ion content : 0.8 ppm
Signal unbalance : D = 0.045

Example 13

209 parts by weight (50 mol%) of 2,2-bis(4-hydroxy-3-tert-butylphenyl)propane was polymerized with 165 parts by weight (50 mol%) of 1,1-bis(4-hydroxyphenyl)cyclohexane and 264 parts by weight of diphenyl carbonate in the same manner as that of Example 1.
Viscosity-average molecular weight: $\overline{M}v$ = 18,000
Glass transition point : Tg = 143°C
Photoelastic constant : C = 48 Brewsters
Birefringence as determined with light incident at an oblique angle of 30° : 2.9 x $10^{-4}$
Water absorption : 0.21%
Residual oligomer content : 1.3%
Residual chloride ion content : 0.7 ppm
signal unbalance : D = 0.03

Example 14

209 parts by weight (50 mol%) of 2,2-bis(4-hydroxy-3-tert-butylphenyl)propane was polymerized with 178 parts by weight (50 mol%) of 4,4′-dihydroxy-2,2,2-triphenylethane and 264 parts by weight of diphenyl carbonate in the same manner as that of Example 1.
Viscosity-average molecular weight: $\overline{M}v$ = 21,500
Glass transition point : Tg = 150° C
Photoelastic constant : C = 43 Brewsters
Birefringence as determined with light incident at an oblique angle of 30° : 2.8 x $10^{-4}$
Water absorption : 0.27%
Residual oligomer content : 0.7%
Residual chloride ion content : 0.7 ppm
signal unbalance : D = 0.04

Example 15

209 parts by weight (50 mol%) of 2,2-bis(4-hydroxy-3-tert-butylphenyl)propane was polymerized with 175 parts by weight (50 mol%) of 2,2-bis(3,5-dimethyl-4-hydroxyphenyl)propane and 264 parts by weight of diphenyl carbonate in the same manner as that of Example 1.
Viscosity-average molecular weight: $\overline{M}v$ = 18,700
Glass transition point : Tg = 154° C
Photoelastic constant : C = 41 Brewsters
Birefringence as determined with light incident at an oblique angle of 30° : 3.1 x $10^{-4}$
Water absorption : 0.3%
Residual oligomer content : 1.3%
Residual chloride ion content : 0.8 ppm
Signal unbalance : D = 0.05

Example 16

209 parts by weight (50 mol%) of 2,2-bis(4-hydroxy-3-tert-butylphenyl)propane was polymerized with 213 parts by weight (50 mol%) of 1,1′-bis(4-hydroxyphenyl)-p-diisopropylbenzene and 264 parts by weight of diphenyl carbonate in the same manner as that of Example 1.
Viscosity-average molecular weight: $\overline{M}v$ = 22,000
Glass transition point : Tg = 136° C
Photoelastic constant : C = 49 Brewsters
Birefringence as determined with light incident at an oblique angle of 30° : 3.1 x $10^{-4}$
Water absorption : 0.17%
Residual oligomer content : 0.7%
Residual chloride ion content : 0.6 ppm
Signal unbalance : D = 0.03

Example 17

167 parts by weight (40 mol%) of 2,2-bis(4-hydroxy-3-tert-butylphenyl)propane was polymerized with 85 parts by weight (20 mol%) of 1,1′-bis(4-hydroxyphenyl)-p-diisopropylbenzene, 143 parts by weight (40 mol%) of 4,4′-dihydroxy-2,2,2-triphenylethane, and 264 parts by weight of diphenyl carbonate in the same manner as that of Example 1.
Viscosity-average molecular weight: $\overline{M}v$ = 21,000
Glass transition point : Tg = 147° C
Photoelastic constant : C = 44 Brewsters
Birefringence as determined with light incident at an oblique angle of 30° : 2.6 x $10^{-4}$
Water absorption : 0.22%
Residual oligomer content : 0.7%
Residual chloride ion content : 0.7 ppm

Signal unbalance : D = 0.03

(Evaluation of recording characteristics)

The polycarbonate copolymer as prepared above were each provided with a recording film, and subjected to evaluation of optical recording characteristics. Specifically, the polycarbonate copolymers as described in Examples 1 to 17 were molded into disk-shaped substrates each having a diameter of 130 mm and a thickness of 1.2 mm with an injection press (Dynamelter; a product of Meiki, Co. Ltd.). A 1,000 Å-thick optical magnetic film was formed on the substrates thus obtained with an alloy target composed of $Tb_{23.5}Fe_{64.2}Co_{12.3}$ (atomic %) in a sputtering device (RF sputtering device; manuf. by Ulvac Corporation). On the recording film was formed a 1,000 Å-thick protective film composed of inorganic glass described in Japanese Patent Laid-Open No. 177449/1985 filed by the applicant of the present application using the same sputtering device as that described above. The performance of the resultant optical magnetic recording disks was evaluated in terms of CN ratio, BER, and change in the CN ratio and reduction rate of reflectance at a temperature of 60°C and an RH of 90%. The results are shown in Table 1.

Table 1

| Sample No. | CN (dB) | BER (bit error rate) | Change in CN after 30 days (%) | Reduction rate of relfectance after 30 days (%) | Birefringence single pass of vertically incident light (nm) | Birefringence of obliquely incident light | CN (dB) |
|---|---|---|---|---|---|---|---|
| | (note: 1) | (note: 4) | (note: 2) | (note: 5) | | | (note: 1) |
| Ex. 1 | 48 | $4\times10^{-6}$ | 94 | 8 | 6 | $3.6\times10^{-4}$ | 55 |
| Ex. 2 | 49 | $4\times10^{-6}$ | 94 | 8 | 7 | $3.5\times10^{-4}$ | 54 |
| Ex. 3 | 47 | $6\times10^{-6}$ | 90 | 9 | 9 | $3.8\times10^{-4}$ | 53 |
| Ex. 4 | 48 | $4\times10^{-6}$ | 94 | 8 | 6 | $3.5\times10^{-4}$ | 55 |
| Ex. 5 | 47 | $5\times10^{-6}$ | 90 | 7 | 8 | $3.2\times10^{-4}$ | 53 |
| Ex. 6 | 49 | $6\times10^{-6}$ | 90 | 8 | 9 | $3.4\times10^{-4}$ | 53 |
| Ex. 7 | 49 | $4\times10^{-6}$ | 94 | 7 | 7 | $3.2\times10^{-4}$ | 54 |
| Ex. 8 | 49 | $6\times10^{-6}$ | 90 | 4 | 9 | $2.5\times10^{-4}$ | 53 |
| Ex. 9 | 50 | $5\times10^{-6}$ | 90 | 8 | 8 | $3.4\times10^{-4}$ | 53 |
| Ex. 10 | 47 | $5\times10^{-6}$ | 90 | 6 | 8 | $3.2\times10^{-4}$ | 53 |
| Ex. 11 | 48 | $5\times10^{-6}$ | 90 | 7 | 8 | $3.3\times10^{-4}$ | 53 |
| Ex. 12 | 50 | $5\times10^{-6}$ | 89 | 4 | 7 | $2.8\times10^{-4}$ | 52 |
| Ex. 13 | 50 | $4\times10^{-6}$ | 90 | 5 | 8 | $2.9\times10^{-4}$ | 52 |
| Ex. 14 | 50 | $6\times10^{-6}$ | 91 | 5 | 7 | $2.8\times10^{-4}$ | 53 |
| Ex. 15 | 50 | $6\times10^{-6}$ | 93 | 6 | 9 | $3.1\times10^{-4}$ | 52 |
| Ex. 16 | 51 | $5\times10^{-6}$ | 92 | 6 | 8 | $3.1\times10^{-4}$ | 52 |
| Ex. 17 | 52 | $6\times10^{-6}$ | 90 | 4 | 6 | $2.6\times10^{-4}$ | 54 |
| Comp. Ex. (note: 3) | 46 | $5\times10^{-5}$ | 85 | 13 | 20 | $5.6\times10^{-4}$ | 46 |

Note:

(1) CN ratio: determined under conditions of a writing power 7 mW (milliWatt), a reading power of 1 mW, a carrier frequency of 1 MHz, a resolution band width of 30 kHz.

(2) change in CN (%) : degree if reduction in CN 30 days after initiation of exposure to an atmosphere kept at a temperature of 60 °C and an RH of 90% relative to initial CN ratio.

(3) Comp. Ex.: an optical magnetic disk prepared in the same manner as that described above, except that a conventional polycarbonate (optical disk grade) substrate was used.

(4) BER is ratio of the number of defective bits to the total number of bits.

(5) reduction rate of reflectance (%): degree of reduction in reflectance 30 days after initiation of exposure to an atmosphere kept at a temperature of 60 °C and an RH of 90% relative to initial reflectance.

## Claims

1. An aromatic polycarbonate copolymer for an optical disk substrate produced by combining at least two bisphenols selected from among those of the following general formulae (I), (II), and (III):

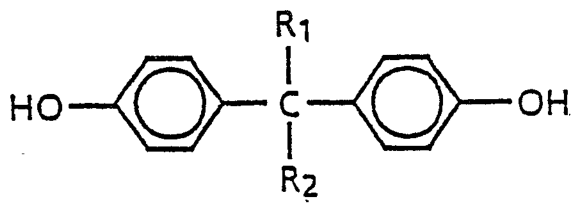

(I)

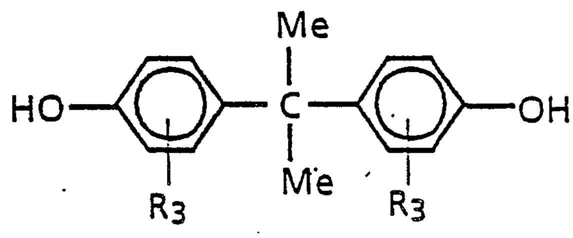

(II)

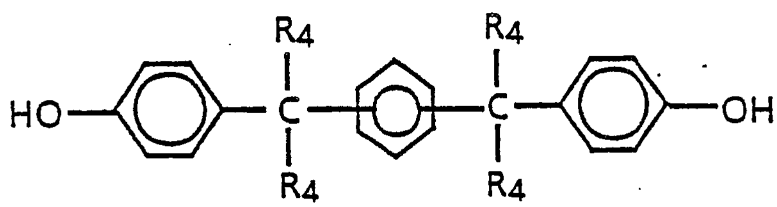

(III)

wherein $R_1$, $R_2$, $R_3$, and $R_4$ are each hydrogen, a straight-chain or branched alkyl group having 1 to 8 carbon atoms, or a phenyl group,
with each other through carbonate linkage.

2. An aromatic polycarbonate copolymer for an optical disk substrate according to claim 1, which has a viscosity average molecular weight ( $\overline{M}v$) of 15,000 to 25,000 as calculated according to the following equation (IV) by making use of an intrinsic viscosity [η] value determined at 20 °C is dichloromethane:
$[\eta] = 1.11 \times 10^{-4} ( \overline{M}v)^{0.82}$ (IV)

3. An aromatic polycarbonate copolymer for an optical disk substrate according to claim 1 or 2, wherein the amount of an oligomer having a molecular weight ( $\overline{M}v$) of 5,000 or less in terms of standard polystyrene and remaining in said aromatic polycarbonate copolymer is 3% or less.

4. An aromatic polycarbonate copolymer for an optical disk substrate according to claim 1, 2 or 3, which has a residual chloride ion content of 1.0 ppm or less.

5. An aromatic polycarbonate copolymer for an optical disk substrate according to claim 1, 2, 3, or 4, which exhibits a water absorption of 0.35% or less.

6. An aromatic polycarbonate copolymer for an optical disk substrate according to claim 1, 2, 3, 4, or 5, which has a glass transition point (Tg) of 130° C or above.

7. An aromatic polycarbonate copolymer for an optical disk substrate according to claim 1, 2, 3, 4, 5, or 6, which has a photoelastic constant of 60 Brewsters ($10^{-12}$ $m^2/N$).

8. An aromatic polycarbonate copolymer for an optical disk substrate according to claim 1, 2, 3, 4, 5, 6, or 7, wherein an optical disk substrate produced therefrom exhibits a birefringence of $4 \times 10^{-4}$ or less as determined with obliquely incident light.

9. An aromatic polycarbonate copolymer for an optical disk substrate according to claim 1, 2, 3, 4, 5, 6, 7, or 8, wherein an optical disk comprising an optical disk substrate produced therefrom exhibits a signal unbalance (D) defined by the following equation of 0.06 or less:

$$D = \frac{D_1 - D_2}{D_1 + D_2}$$

wherein $D_1$ and $D_2$ are respectively values obtained by measuring light transmitted through a beam splitter and light reflected by said beam splitter by means of a pin diode.

10. An aromatic polycarbonate copolymer for an optical disk substrate according to claim 1, 2, 3, 4, 5, 6, 7, 8, 9, wherein an optical disk comprising an optical disk substrate produced therefrom and, superimposed thereon, a recording film layer and a reflective film layer in that order exhibits a reduction rate of reflectance of 10% or less based on the initial reflectance.

11. An optical disk having a recording layer and a substrate composed of the aromatic polycarbonate copolymer as defined in Claim 1.

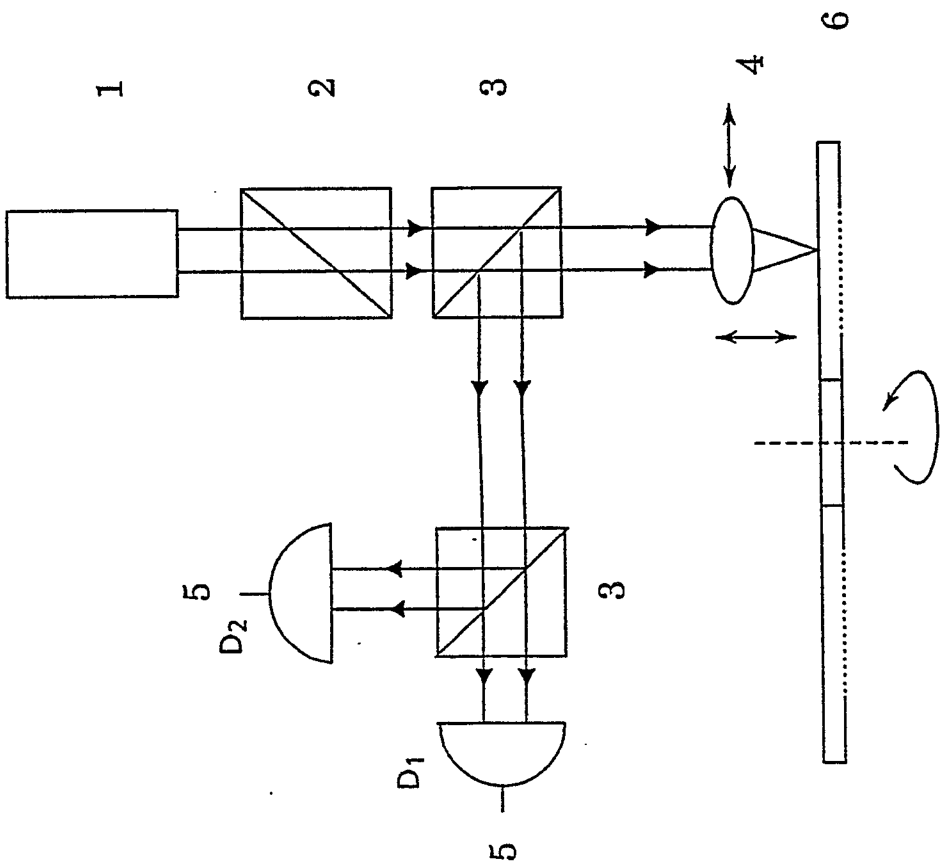


Fig. 1